# FASCICULE DE BREVET EUROPEEN

(11) **EP 4 673 696 B1**
(45) Date de publication et mention de la délivrance du brevet: **02.12.2026**
(21) Numéro de dépôt: 24707083.2
(22) Date de dépôt: 28.02.2024
(51) Int. Cl.: F28D 1/03, F28D 21/00, F28F 3/04, H01M 10/6556, H01M 10/613, H01M 10/6554, H01M 10/6557, H01M 10/6567, H01M 10/625

(54) **DISPOSITIF DE RÉGULATION THERMIQUE ET DISPOSITIF DE CHARGE COMPRENANT UN DISPOSITIF DE RÉGULATION THERMIQUE**
WÄRMEREGELUNGSVORRICHTUNG UND LADEVORRICHTUNG MIT EINER WÄRMEREGELUNGSVORRICHTUNG
THERMAL REGULATION DEVICE, AND CHARGING DEVICE COMPRISING A THERMAL REGULATION DEVICE

(30) Priorité: 01.03.2023 FR 2301884
(43) Date de publication de la demande: 07.01.2026
(73) Titulaire: Valeo Electrification, 95892 Cergy Pontoise (FR)
(72) Inventeur: FERNANDEZ, Roberto, 50011 Zaragoza (ES); LANARD, Jean-Louis, 78322 Le Mesnil-Saint-Denis Cedex (FR); OGER, Philippe, 78322 Le Mesnil-Saint-Denis Cedex (FR); BARRE, Boris, 78322 Le Mesnil-Saint-Denis Cedex (FR); JIMENEZ, Jesus, 50011 Zaragoza (ES)
(74) Mandataire: Valeo Powertrain Systems
(86) Numéro de dépôt international: PCT/EP2024/055121
(87) Numéro de publication internationale: WO 2024/180137

(56) Documents cités:
- EP-A1- 3 741 876
- WO-A1-2020/178536
- WO-A1-2020/212457
- DE-A1- 102017 202 552

## Description

La présente invention concerne un dispositif de régulation thermique, notamment de refroidissement, notamment pour composant électrique susceptible de dégager de la chaleur lors de son fonctionnement, notamment un dispositif de refroidissement d'au moins une batterie ou cellules de batterie de véhicule, par exemple un véhicule automobile. Un tel dispositif est connu du document EP-A-3741876, qui divulgue les fonctionnalités du préambule de la revendication 1.

Le véhicule peut être de type terrestre, maritime ou aérien.

Les composants susceptibles d'être concernés par la présente invention peuvent être des éléments de stockage d'énergie électrique, notamment des éléments de batteries, ou d'électronique de puissance, par exemple de façon non limitative des semi-conducteurs, tels que des diodes ou transistors. Il pourrait s'agir aussi de composants de serveurs informatiques.

Les systèmes électriques ou électroniques, par exemple des dispositifs de stockage d'énergie électrique au sein d'un véhicule automobile ou des serveurs informatiques, peuvent être soumis à des contraintes importantes du fait d'un besoin d'alimenter un élément nécessitant une quantité importante d'énergie ou du fait de la nécessité d'effectuer un traitement important d'informations en un minimum de temps. Ainsi, lorsque ces systèmes électriques ou électroniques sont fortement mis à contribution, ceux-ci sont susceptibles de dégager une quantité importante de chaleur et de ce fait d'atteindre des températures élevées nuisant à la durée de vie desdits systèmes électriques ou électroniques.

Afin de limiter la température des systèmes électriques ou électroniques, il est connu de prévoir des dispositifs de refroidissement associés à ces systèmes. De tels dispositifs de refroidissement sont agencés au voisinage des pièces du système électrique ou électronique dégageant de la chaleur et sont parcourus par un fluide de refroidissement dont la température permet un échange de calorie avec ces pièces et le refroidissement de ces dernières. Ces dispositifs de refroidissement peuvent être notamment des dispositifs à plaques, obtenus par un assemblage d'au moins deux plaques embouties et soudées entre elles afin de former des canaux entre lesdites plaques, lesdits canaux permettant la circulation du fluide de refroidissement.

L'invention concerne notamment des échangeurs thermiques à plaques destinés à la circulation d'un fluide frigorigène permettant le refroidissement des batteries de véhicules hybrides ou électriques.

Industriellement, ces échangeurs sont généralement réalisés dans des matériaux métalliques, et sont assemblés par brasage.

Le procédé de brasage bien que très répandu dans l'industrie aujourd'hui comporte des désavantages, notamment celui de l'empreinte carbone d'un tel procédé de fabrication, et si bien que dans le but de réduire, notamment, la consommation électrique et donc les émissions générées indirectement par un tel procédé, il est peu à peu proposé des solutions alternatives pour joindre deux plaques, l'une d'elles étant l'assemblage des deux plaques par soudure, notamment par soudure laser.

Le procédé de soudage laser présente plusieurs avantages. En effet, un tel procédé est moins énergivore et moins polluant qu'un soudage par brasage. Il permet d'assurer un joint fiable, sans fuite, particulièrement dans les lignes droites. Cependant, les échangeurs de chaleurs comprennent d'autres types de trajectoires, telles que des tours, des boucles ou d'autres trajectoires complexes.

Ces trajectoires, où la direction du faisceau laser change, sont plus sensibles aux défauts de soudage, comme les fissures, qui peuvent conduire à des fuites.

Il en résulte un besoin pour obtenir des échangeurs de chaleurs robustes et sans fuites, et ce à l'aide d'un procédé plus écologique, rapide et fiable.

La présente invention a pour objectif de pallier au moins partiellement un ou plusieurs des inconvénients précités en proposant un échangeur de chaleur, fabriquée grâce à une combinaison de plusieurs technologies d'assemblage, afin d'assurer les exigences d'étanchéité et de la résistance mécanique, tout en réduisant la consommation d'électricité et la production de polluants par rapport à un procédé de brasage.

L'invention concerne ainsi un dispositif de régulation thermique, notamment de refroidissement, pour composant électrique susceptible de dégager de la chaleur lors de son fonctionnement, notamment pour un module de stockage d'énergie électrique, ce dispositif comportant une première plaque et une seconde plaque assemblée avec la première plaque délimitée chacune par des bords, pour former ensemble une pluralité de canaux de circulation pour un fluide caloporteur, notamment un fluide réfrigérant, la pluralité de canaux définissant une zone de canaux, au moins une des plaques étant emboutie afin de former une partie des parois des canaux, l'assemblage des deux plaques étant réalisée par soudure laser par transparence au niveau des parois des canaux, le dispositif étant caractérisé en ce qu'une zone définissant au moins partiellement le périmètre de la zone de canaux comprend un moyen d'assemblage différent de la soudure laser par transparence, le moyen d'assemblage différent est choisi parmi la soudure laser avec un fil d'apport de matière, le collage, le soudage par friction-malaxage, ou une combinaison de ceux-ci.

On comprend par « l'assemblage réalisée par soudure laser au niveau de la zone de canaux » que les deux plaques sont fixées ensemble au niveaux des canaux de manière à permettre entre les deux pièces une circulation de fluide caloporteur.

Avantageusement, ce moyen d'assemblage différent de la soudure laser par transparence, permet d'améliorer la tenue mécanique et la fiabilité du dispositif tout en conservant une certaine facilité de fabrication en s'affranchissant des inconvénients de la soudure laser par transparence.

Le dispositif de charge peut en outre comporter une ou plusieurs caractéristiques suivantes décrites ci-après, prises séparément ou en combinaison.

Selon une particularité de l'invention, la zone comprenant un moyen d'assemblage (8) définit la totalité du périmètre de la zone de canaux.

Selon une particularité de l'invention, au moins une paroi des canaux définit le périmètre de la zone de canaux. On comprend alors par « périmètre de la zone de canaux » la paroi des canaux la plus éloignée du centre du dispositif, et notamment la partie de la paroi des canaux d'une plaque qui est jointe avec l'autre plaque.

Selon une particularité de l'invention, le périmètre de la zone de canaux, de préférence l'au moins une paroi de canaux définissant au moins une partie du périmètre de la zone de canaux, comprend une soudure formée d'une soudure par friction-malaxage ou une jonction par collage.

Selon une particularité de l'invention, le périmètre de la zone de canaux, de préférence l'au moins une paroi de canaux définissant au moins une partie du périmètre de la zone de canaux, comprend une soudure formée d'une soudure par friction-malaxage.

Selon une particularité de l'invention, le périmètre de la zone de canaux, de préférence l'au moins une paroi de canaux définissant au moins une partie du périmètre de la zone de canaux comprend une jonction par collage.

Selon une particularité de l'invention, le périmètre de la zone de canaux, de préférence l'au moins une paroi emboutie de canaux définissant au moins une partie du périmètre de la zone de canaux définit la totalité du périmètre de la zone de canaux et forme un canal d'étanchéité, le canal d'étanchéité comprenant de la colle formant un joint.

Selon une particularité de l'invention, le dispositif comprend une soudure supplémentaire, de préférence par laser, bordant le côté externe de la jonction du périmètre de la zone de canaux par le moyen d'assemblage différent.

Selon une particularité de l'invention, la soudure supplémentaire, de préférence par laser, joint au moins les bords d'au moins une plaque à l'autre plaque.

L'invention propose également un procédé d'assemblage de deux plaques pour obtenir un dispositif de régulation thermique, notamment de refroidissement, pour composant électrique susceptible de dégager de la chaleur lors de son fonctionnement, notamment pour un module de stockage d'énergie électrique, le procédé étant caractérisé en ce qu'il comprend les étapes suivantes,
- Fournir deux plaques délimitée chacune par des bords, au moins une des plaques étant emboutie afin de former une partie des parois des canaux de façon à former avec l'autre plaque ensemble une pluralité de canaux de circulation pour un fluide caloporteur, notamment un fluide réfrigérant, la pluralité de canaux définissant une zone de canaux,
- Soudure laser, de préférence par transparence, des deux plaques au niveau des parois entre les canaux en contact avec la deuxième plaque pour former la zone de canaux,
- Puis jonction du périmètre de la zone de canaux d'une plaque à l'autre plaque par un moyen d'assemblage différent de la soudure laser par transparence, de préférence par jonction d'au moins une paroi des canaux définissant ledit périmètre.

Selon une particularité de l'invention, le procédé comprend en outre une troisième étape de jonction, par une soudure supplémentaire, de préférence par laser, entourant la jonction du périmètre de la zone de canaux par le moyen d'assemblage différent, notamment de façon à souder des bords d'au moins une des deux plaques sur l'autre plaque, de préférence par soudure laser.

Selon une particularité de l'invention, le procédé comprend en outre une étape de mise en place de colle formant un joint dans une paroi emboutie de canaux définissant la totalité du périmètre de la zone de canaux et formant un canal d'étanchéité, de façon à ce que la colle est comprimée par les deux plaques lors de leur assemblage, notamment suivi d'une étape de traitement thermique de la colle dans la paroi emboutie une fois les plaques du dispositif assemblées et ladite colle comprimée.

Selon une particularité de l'invention, le procédé comprend en outre une étape de traitement thermique de la colle dans la paroi emboutie une fois les plaques du dispositif assemblées et ladite colle comprimée.

### DESCRIPTION DETAILLEE DES FIGURES

D'autres caractéristiques et avantages de l'invention apparaitront plus clairement à la lecture de la description suivante, donnée à titre d'exemple illustratif et non limitatif, et des dessins annexés parmi lesquels :
- la [Figure 1] illustre, schématiquement et partiellement, un dispositif selon de refroidissement selon l'art antérieur;
- la [Figure 2] illustre, schématiquement, un dispositif selon un premier mode de réalisation de l'invention selon une vue en perspective.
- la [Figure 3] illustre, schématiquement et partiellement, un détail du dispositif selon un second mode de réalisation de l'invention, en vue de coupe ;
- la [Figure 4] illustre, schématiquement et partiellement, un détail du dispositif selon un troisième mode de réalisation de l'invention, en vue de coupe.
- la [Figure 5] illustre, schématiquement et partiellement, un détail du dispositif selon un quatrième mode de réalisation de l'invention, en vue de coupe.

### DISPOSITIF DE REGULATION THERMIQUE

L'invention concerne en particulier le dispositif de régulation thermique 3 décrit plus en détail ci-après. Il comporte un dispositif de régulation thermique, notamment de refroidissement, pour composant électrique (2) susceptible de dégager de la chaleur lors de son fonctionnement, notamment pour un module de stockage d'énergie électrique, ce dispositif comportant une première plaque (2) et une seconde plaque (3) assemblée avec la première plaque délimitée chacune par des bords, pour former ensemble une pluralité de canaux (5) de circulation pour un fluide caloporteur, notamment un fluide réfrigérant, la pluralité de canaux définissant une zone de canaux (6), au moins une des plaques étant emboutie afin de former une partie des parois des canaux, l'assemblage des deux plaques étant réalisée par soudure laser par transparence (7) au niveau des parois des canaux, le dispositif étant caractérisé en ce qu'une zone définissant au moins partiellement le périmètre de la zone de canaux comprend un moyen d'assemblage (8) différent de la soudure laser (7) par transparence, le moyen d'assemblage (8) différent est choisi parmi la soudure laser avec un fil d'apport de matière, le collage, le soudage par friction-malaxage, ou une combinaison de ceux-ci.

De petites fuites de communication entre les canaux peuvent être acceptées, car il n'y a pas de perte de fluide vers l'extérieur du refroidisseur, seulement une diminution insignifiante de l'homogénéité thermique à la surface de la batterie. Les fuites externes, indépendamment de leur localisation, ne sont pas acceptables. Un des handicaps de la soudure laser par transparence, est qu'il est exigé un contact parfait entre les surfaces à souder.

La soudure de la batterie se fait typiquement de l'intérieur du refroidisseur vers l'extérieur du refroidisseur, afin de pouvoir absorber les dilatations et déformations des plaques causées par les soudures précédentes. Ceci fait que la surface des plaques au périmètre du canal peut être déformée ou qu'il est difficile de maintenir les deux plaques en contact. Le risque de fuites est alors accru.

Les contraintes mécaniques concernant les refroidisseurs de batterie sont de plus en plus nombreuses, et le comportement mécanique du refroidisseur est devenu un sujet important.

Une des exigences internes est de garder le temps de cycle de fabrication du refroidisseur le plus court possible, ainsi dans tous les cas, la jonction entre les canaux est réalisée par soudure laser par transparence. L'invention est appliquée sur le périmètre de la plaque ou dans des zones spécifiques. L'avantage de la présente invention est donc de conserver les avantages de la soudure laser par transparence tout en s'affranchissant de ses inconvénients.

Le dispositif de charge peut en outre comporter une ou plusieurs caractéristiques suivantes décrites ci-après, prises séparément ou en combinaison.

Les dimensions du cordon de soudure peuvent être comprises entre 0.5mm et 1.5mm de préférence 0.75mm et 1.25mm.

La localisation de la jonction joignant les bords d'une plaque à l'autre plaque est en fonction de sa position par rapport auxdits bords et dépend de la position des bords des canaux par rapport aux bords de la plaque plate. Cette distance entre la jonction et le bord de la plaque le plus proche peut varier de 0 à 5 cm, de préférence 0.1cm à 3 encore préférentiellement 0.1 cm à 1 cm .

On comprend ici que les « bords » de la plaque peuvent être plats ou emboutis.

On comprend qu'on entend par « soudure d'angle par laser » ou fillet joint welding en anglais, une soudure sans apport de matière entre le bord d'une plaque, de préférence la plaque emboutie, et une zone plate de l'autre plaque, de préférence la plaque plate supérieure. Le laser est utilisé pour fondre la matière des plaques pour réaliser la soudure entre celles-ci.

Dans le cas de la soudure laser avec un fil d'apport de matière, ou filler wire welding en anglais, la soudure peut être réalisée avec la même position des plaques par exemple, mais un fil de matière est fondu afin d'apporter la matière qui va former le cordon de soudure.

Dans certains modes de réalisation, une des plaques comprend une déformation formant un repli en direction de la deuxième plaque, par exemple un bord relevé. Cela permet avantageusement de réduire les risques de poussières, de débris ou d'humidité pouvant s'introduire entre les deux plaques.

Cela permet aussi avantageusement de réduire les effets des déformations dues à la jonction par soudure laser réalisée dans la zone de canaux.

La déformation de la première plaque emboutie afin de former les canaux est généralement réalisée par emboutissage, avec une déformation. La longueur de la déformation, en direction de la seconde plaque, à laquelle la première plaque est destinée à être jointe, ne doit pas dépasser l'épaisseur de la ladite seconde plaque. Lors de la jonction des plaques, la soudure laser crée des contraintes d'effort, c'est pourquoi il est avantageux d'avoir des soudures externes solides.

Dans certains modes de réalisations, la soudure laser se fait de l'intérieur de la plaque tel que le centre, vers l'extérieur, afin de pouvoir gérer au mieux lesdites contraintes d'effort créées par la déformation puis la soudure des plaques.

La colle peut être choisie parmi les types de colles tels que le PU (polyuréthane), l'EPOXI ou méthacrylate.

Dans certains modes de réalisation, la colle est réticulée par exemple par traitement à la température postérieurement à son application dans le dispositif, la colle étant réalisée en EPDM, NBR ou FKM.

Dans certains modes de réalisation, la soudure laser par transparence est d'abord réalisée entre les canaux, puis est réalisé le second moyen d'assemblage additionnel, tel que par exemple la soudure par friction malaxage sur le périmètre de la plaque.

Le soudage par friction malaxage (Friction Stir Welding en Anglais) est un procédé de soudage à l'état solide qui consiste à assembler deux pièces en les amenant dans un état pâteux grâce à un pion en rotation. Un exemple d'un tel procédé consiste en un outil de forme cylindrique comportant un épaulement et un pion coaxial tourne à vitesse constante sur la ligne de contact entre les pièces à souder, ce qui provoque un « ramollissement » des matériaux, qui deviennent pâteux. L'outil pénètre alors dans le plan de joint et mélange intimement les matériaux. L'assemblage complet est obtenu lors de la progression de l'outil, qui parcourt progressivement toute la zone qui doit être soudée. Les températures maximales atteintes durant le procédé sont inférieures à la température de fusion de la matière : le procédé de soudage par friction malaxage est donc un procédé de soudage à l'état solide.

Dans certains modes de réalisation, le dispositif comprend un tracé de soudage délimitant au moins partiellement la zone de circulation de fluide et au moins un cordon de soudure, correspondant par exemple à la fin du tracé de soudage, est réalisé au contact du tracé de soudage au niveau d'au moins un point de contact, le tracé de soudage et le cordon de soudure ayant une courbure différente l'un par rapport à l'autre au niveau dudit point de contact.

Grâce à la mise en œuvre du cordon de soudure, l'étanchéité du dispositif de refroidissement est assurée avec certitude, et l'arrêt du faisceau laser effectuant le soudage n'altère pas l'étanchéité du dispositif de refroidissement. Tel que cela va être décrit ci-après, le cordon de soudure peut consister ainsi en une opération de soudage additionnelle qui vient entourer une extrémité du tracé de soudage et dès lors assurer une étanchéité autour d'une zone présentant potentiellement des fuites formée par l'extrémité du tracé de soudage, ou bien consister en un prolongement du tracé de soudage pour délocaliser dans une zone non problématique, car éloignée de la zone de circulation de fluide, le risque de fuite potentiellement due à l'arrêt du faisceau laser.

Dans certains modes de réalisation, le cordon de soudure est établi au moins partiellement en contact avec le tracé de soudage et constitue un soudage supplémentaire renforçant l'étanchéité du dispositif de refroidissement. Autrement dit, le cordon de soudure vient doubler l'étanchéité du dispositif de refroidissement en rendant étanche le tracé de soudage. Ainsi, le fluide de refroidissement ne peut s'écouler à travers un potentiel tracé de soudage car le cordon de soudure vient soit refermer le tracé de soudage, en entourant un potentiel point de fragilité au sein du tracé de soudage, soit prolonger le tracé de soudage pour délocaliser ce potentiel point de fragilité. Dans chacun de ces cas, l'étanchéité est assurée et certifiée grâce à la courbure différente du cordon de soudure par rapport à celle du tracé de soudage au niveau du point de contact entre cordon de soudure et tracé de soudage.

Selon certains modes de réalisation, le cordon de soudure forme un prolongement du tracé de soudage. Autrement dit, le cordon de soudure est mis en œuvre dans la continuité du tracé de soudage et le point de contact entre le tracé de soudage et le cordon de soudure correspond à la jonction entre la fin du tracé de soudage et le début du cordon de soudure. C'est notamment grâce à ce prolongement par le cordon de soudure que l'étanchéité du dispositif de refroidissement est assurée.

Comme cela a été évoqué précédemment, la courbure est différente entre le tracé de soudage et le cordon de soudure. Ainsi, à partir du point de contact, le cordon de soudure dévie d'une trajectoire établie par le tracé de soudage.

Selon certains modes de réalisation, le tracé de soudage présente un profil fermé, le cordon de soudure présentant une extrémité libre à distance du profil fermé du tracé de soudage.

A titre d'exemple, le profil fermé tel que défini par le tracé de soudage peut correspondre au contour des plaques afin d'éviter un écoulement du fluide de refroidissement hors du dispositif de refroidissement. D'une manière générale, le profil fermé peut définir une zone où doit être contenu le fluide de refroidissement, ou à l'inverse une zone où le fluide de refroidissement, pour des motifs divers, ne doit pas pénétrer. Le cordon de soudure quant à lui s'étend jusqu'à l'extrémité libre qui dévie du profil fermé grâce à la courbure différente par rapport à celle du tracé de soudage. Ce prolongement formant une extrémité libre permet d'interrompre le faisceau laser à distance de la fin du tracé de soudage et ainsi de ne pas générer de défauts d'étanchéité tels qu'évoqués précédemment.

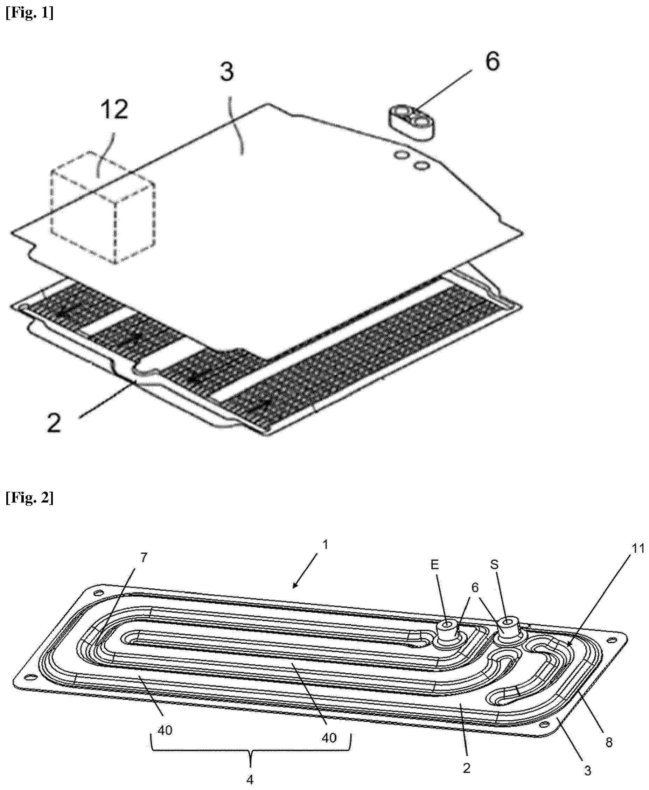

On a représenté sur la figure 1 un dispositif de régulation thermique 1 de l'art antérieur comportant un ensemble de cellules de batterie 12 à refroidir, par exemple rangées suivant deux rangées ou plus, qui sont en contact thermique avec une plaque supérieure 3 du dispositif de régulation thermique 1. Le dispositif 1 comprend une plaque emboutie 2 et une plaque plane 3 entre lesquelles passe du fluide caloporteur à travers des canaux. La majorité des dispositifs de ce type sont assemblés par brasage dans des grands fours ce qui présente plusieurs inconvénients, notamment le coût de tels fours et leur empreinte carbone lors du fonctionnement.

La figure 2 présente un exemple de réalisation du dispositif de régulation thermique 1 comprenant une première plaque, de préférence emboutie 2 et une seconde plaque, de préférence plane 3. Les canaux 40 de la zone de canaux 4 sont visibles et sont configurés pour comprendre un fluide caloporteur qui parcourt lesdits canaux 40. La fixation d'une plaque sur l'autre est réalisée au niveau de la zone de canaux 4 par soudure laser par transparence, tandis qu'un moyen d'assemblage (8) différent de la soudure laser (7) par transparence, joint une plaque (2, 3) à l'autre plaque (2, 3) au niveau du périmètre de la zone de canaux.

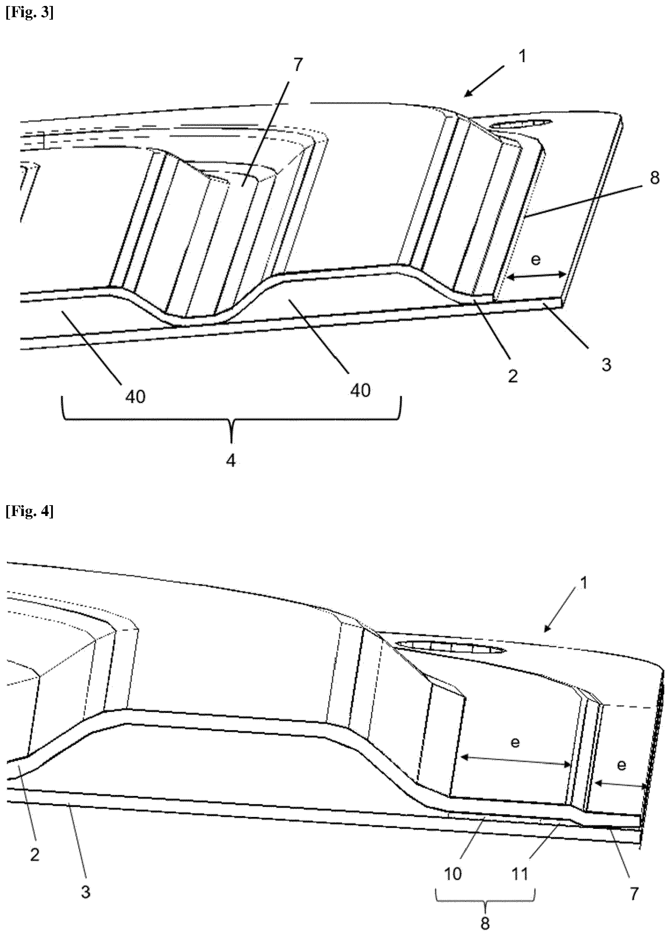

Dans certains modes de réalisation, tel que représenté à titre d'exemple et de façon non limitative à la figure 3, la plaque emboutie 2 et la plaque plane 3 sont jointes par soudure laser d'angle, aussi dit « Fillet joint Laser Welding », ou par soudure laser avec un fil d'apport de matière, aussi dit « Filler wire Laser Welding » au niveau des bords d'une plaque, ici la plaque emboutie 2.

Ainsi, dans certains modes de réalisation, la plaque emboutie 2 et la plaque plane 3 sont jointes par un moyen d'assemblage (8) différent de la soudure laser (7) au niveau des bords d'une plaque, ici la plaque emboutie 2 sur une autre plaque, ici la plaque plane 3, sur une ligne distante du bord de ladite plaque plane 3.

La plaque plane 3 s'étend ainsi au-delà des bords de l'autre plaque emboutie 2.

Avantageusement, cela permet de réduire le poids du dispositif, car la plaque dont les bords sont fixés à l'autre plaque est plus petite que l'autre. En outre, cela permet de servir de la plaque plus grande comme d'un écran de protection de la jonction d'une partie des impuretés de l'environnement, afin d'améliorer la résistance à la corrosion.

Dans certains modes de réalisation, la seconde plaque s'étend au-delà des bords de la première plaque (2) sur une longueur e d'au moins 1mm, de préférence au moins 1.5mm,.

Cela permet avantageusement notamment de réduire le poids du dispositif tout en bénéficiant de la protection contre la corrosion, et ce de façon optimale.

Dans certains modes de réalisation, tel que représenté à titre d'exemple et de façon non limitative à la figure 4, une des deux plaques comprend autour de la zone de canaux un embouti 8, par exemple la plaque embouti 2.

Ledit embouti 8 peut ainsi comprendre un élément adhésif 10, par exemple de la colle, afin d'assurer la jonction des deux plaque et l'étanchéité de l'assemblage.

Dans certains modes de réalisation (non représentés), le dispositif comprend un élément adhésif 10, par exemple de la colle, sans comprendre d'embouti supplémentaire 8.

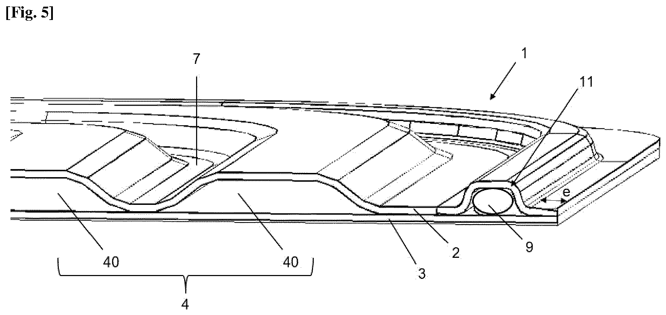

Dans certains modes de réalisation, tel que représenté à titre d'exemple et de façon non limitative aux figures 4 et 5, une des deux plaques par exemple la plaque emboutie 2, comprend autour de la zone de canaux un embouti 11 formant le périmètre de la zone de canaux, le dispositif comprenant un joint d'étanchéité 9 ou un adhésif 10 formant un joint d'étanchéité 9, comprimé entre les deux plaques (2, 3), le joint d'étanchéité 9 étant placé dans l'espace entre les deux plaques (2, 3) formé par l'embouti 11.

L'embouti 11 est de préférence bordé d'au moins un côté, par une soudure laser additionnelle joignant les deux plaques. Ladite jonction peut être située entre le joint d'étanchéité 9 et le bord d'au moins l'une des plaques, et peut par exemple être réalisé par une soudure laser par transparence.

Dans certains modes de réalisation, la longueur e du moyen de jonction 8 formé par un embouti 11 comportant un adhésif 10 ou un joint d'étanchéité 9 et la longueur e de la soudure laser additionnelle située entre le joint d'étanchéité 9 et le bord d'au moins l'une des plaques sont supérieures à 3mm.

Dans certains modes de réalisation, la hauteur du joint d'étanchéité 9 est d'au moins 1,5mm.

On comprend que les longueurs e₁, e₂, e₃, e₄, e₅, et e₆ sont mesurées à un point donné selon la direction perpendiculaire à la direction principale dans laquelle elle s'étende à ce point.

Dans certains modes de réalisation, la hauteur de l'embouti 11 est d'au moins 3mm.

La structure interne du joint 9 peut être modifié après son positionnement dans l'embouti 11, par exemple par un traitement à la chaleur.

### LISTE DES SIGNES DE REFERENCE

1. dispositif de régulation thermique
2. première plaque, emboutie
3. seconde plaque, plane
4. zone de canaux
40. canal
5. Déformation formant repli
6. Connecteurs
7. Soudure laser par transparence
8. Moyen d'assemblage différent
9. joint d'étanchéité
10. Adhésif
11. embouti
12. Elément, Dispositif de stockage, composant électrique
E. Entrée de fluide
S. Sortie de fluide

## Revendications

1. Dispositif (1) de régulation thermique, notamment de refroidissement, pour composant électrique (2) susceptible de dégager de la chaleur lors de son fonctionnement, notamment pour un module de stockage d'énergie électrique, ce dispositif comportant une première plaque (2) et une seconde plaque (3) assemblée avec la première plaque délimitée chacune par des bords, pour former ensemble une pluralité de canaux (5) de circulation pour un fluide caloporteur, notamment un fluide réfrigérant, la pluralité de canaux définissant une zone de canaux (6), au moins une des plaques étant emboutie afin de former une partie des parois des canaux, l'assemblage des deux plaques étant réalisée par soudure laser par transparence (7) au niveau des parois des canaux,
le dispositif étant **caractérisé en ce qu'**une zone définissant au moins partiellement le périmètre de la zone de canaux comprend un moyen d'assemblage (8) différent de la soudure laser (7) par transparence, le moyen d'assemblage (8) différent est choisi parmi la soudure laser avec un fil d'apport de matière, le collage, le soudage par friction-malaxage, ou une combinaison de ceux-ci.

2. Dispositif (1) de régulation thermique, selon la revendication précédente, dans lequel au moins une paroi des canaux définit le périmètre de la zone de canaux.

3. Dispositif (1) de régulation thermique, selon l'une des revendications précédentes, dans lequel le périmètre de la zone de canaux, de préférence l'au moins une paroi de canaux définissant au moins une partie du périmètre de la zone de canaux, comprend une soudure formée d'une soudure par friction-malaxage.

4. Dispositif (1) de régulation thermique, selon l'une des revendications précédentes, dans lequel le périmètre de la zone de canaux, de préférence l'au moins une paroi de canaux définissant au moins une partie du périmètre de la zone de canaux comprend une jonction par collage.

5. Dispositif de régulation thermique, selon l'une des revendications précédentes, dans lequel le périmètre de la zone de canaux, de préférence l'au moins une paroi emboutie de canaux définissant au moins une partie du périmètre de la zone de canaux définit la totalité du périmètre de la zone de canaux et forme un canal d'étanchéité, le canal d'étanchéité comprenant de la colle formant un joint.

6. Dispositif de régulation thermique, selon l'une des revendications précédentes, dans lequel le dispositif comprend une soudure supplémentaire, de préférence par laser, bordant le côté externe de la jonction du périmètre de la zone de canaux par le moyen d'assemblage différent.

7. Dispositif de régulation thermique, selon l'une des revendications précédentes, dans lequel la soudure supplémentaire, de préférence par laser, joint au moins les bords d'au moins une plaque à l'autre plaque.

8. Procédé d'assemblage de deux plaques pour obtenir un dispositif de régulation thermique, notamment de refroidissement, pour composant électrique susceptible de dégager de la chaleur lors de son fonctionnement, notamment pour un module de stockage d'énergie électrique, le procédé étant **caractérisé en ce qu'**il comprend les étapes suivantes,
- Fournir deux plaques délimitée chacune par des bords, au moins une des plaques étant emboutie afin de former une partie des parois des canaux de façon à former avec l'autre plaque ensemble une pluralité de canaux de circulation pour un fluide caloporteur, notamment un fluide réfrigérant, la pluralité de canaux définissant une zone de canaux,
- Soudure laser par transparence, des deux plaques au niveau des parois entre les canaux en contact avec la deuxième plaque pour former la zone de canaux,
- Puis jonction du périmètre de la zone de canaux d'une plaque à l'autre plaque par un moyen d'assemblage différent de la soudure laser par transparence, de préférence par jonction d'au moins une paroi des canaux définissant ledit périmètre.

9. Procédé d'assemblage selon la revendication précédente, qui comprend en outre une troisième étape de jonction, par une soudure supplémentaire, de préférence par laser, entourant la jonction du périmètre de la zone de canaux par le moyen d'assemblage différent, notamment de façon à souder des bords d'au moins une des deux plaques sur l'autre plaque, de préférence par soudure laser.

10. Procédé d'assemblage selon l'une des revendications 8 à 9, qui comprend en outre une étape de mise en place de colle formant un joint dans une paroi emboutie de canaux définissant la totalité du périmètre de la zone de canaux et formant un canal d'étanchéité, de façon à ce que la colle est comprimée par les deux plaques lors de leur assemblage, notamment suivi d'une étape de traitement thermique de la colle dans la paroi emboutie une fois les plaques du dispositif assemblées et ladite colle comprimée.

## Patentansprüche

1. Vorrichtung (1) zur thermischen Regulierung, insbesondere zur Kühlung, für elektrische Bauteile (2), die während ihres Betriebs Wärme abgeben können, insbesondere für ein Modul zur Speicherung elektrischer Energie, wobei diese Vorrichtung eine erste Platte (2) und eine zweite Platte (3) umfasst, die mit der ersten Platte zusammengefügt ist und jeweils durch Ränder begrenzt wird, um gemeinsam eine Vielzahl von Strömungskanälen (5) für ein Wärmeträgerfluid, insbesondere ein Kältemittel, zu bilden, wobei die Vielzahl von Kanälen einen Kanalbereich (6) definiert, wobei mindestens eine der Platten gepresst ist, um einen Teil der Kanalwände zu bilden, die Verbindung der beiden Platten durch Laserdurchstrahlschweißen (7) an den Kanalwänden erfolgt, die Vorrichtung **dadurch gekennzeichnet ist, dass** ein Bereich, der zumindest teilweise den Umfang des Kanalbereichs definiert, ein Verbindungsmittel (8) umfasst, das sich vom Laserdurchstrahlschweißen (7) unterscheidet, wobei das unterschiedliche Verbindungsmittel (8) aus Laserschweißen mit einem Zusatzwerkstoffdraht, Kleben, Reibrührschweißen oder einer Kombination davon ausgewählt wird.

2. Vorrichtung (1) zur thermischen Regulierung nach dem vorhergehenden Anspruch, bei der mindestens eine Kanalwand den Umfang des Kanalbereichs definiert.

3. Vorrichtung (1) zur thermischen Regulierung nach einem der vorhergehenden Ansprüche, bei der der Umfang des Kanalbereichs, vorzugsweise die mindestens eine Kanalwand, die mindestens einen Teil des Umfangs des Kanalbereichs definiert, eine durch Reibrührschweißen gebildete Schweißnaht umfasst.

4. Vorrichtung (1) zur thermischen Regulierung nach einem der vorhergehenden Ansprüche, bei der der Umfang des Kanalbereichs, vorzugsweise die mindestens eine Kanalwand, die mindestens einen Teil des Umfangs des Kanalbereichs definiert, eine Klebeverbindung umfasst.

5. Vorrichtung zur thermischen Regulierung nach einem der vorhergehenden Ansprüche, bei der der Umfang des Kanalbereichs, vorzugsweise die mindestens eine gepresste Kanalwand, die mindestens einen Teil des Umfangs des Kanalbereichs definiert, den gesamten Umfang des Kanalbereichs definiert
und einen Dichtungskanal bildet, wobei der Dichtungskanal Klebstoff enthält, der eine Dichtung bildet.

6. Vorrichtung zur thermischen Regulierung nach einem der vorhergehenden Ansprüche, bei der die Vorrichtung eine zusätzliche Schweißnaht, vorzugsweise eine Laserschweißnaht, umfasst, die die Außenseite der Verbindung des Umfangs des Kanalbereichs durch das unterschiedliche Verbindungsmittel begrenzt.

7. Vorrichtung zur thermischen Regulierung nach einem der vorhergehenden Ansprüche, bei der die zusätzliche Schweißnaht, vorzugsweise eine Laserschweißnaht, mindestens die Ränder mindestens einer Platte mit der anderen Platte verbindet.

8. Verfahren zur Verbindung zweier Platten zur Herstellung einer Vorrichtung zur thermischen Regulierung, insbesondere zur Kühlung, für elektrische Bauteile, die während ihres Betriebs Wärme abgeben können, insbesondere für ein Modul zur Speicherung elektrischer Energie, wobei das Verfahren **dadurch gekennzeichnet ist, dass** es die folgenden Schritte umfasst: - Bereitstellen von zwei Platten, die jeweils durch Ränder begrenzt werden, wobei mindestens eine der Platten gepresst ist, um einen Teil der Kanalwände zu bilden, sodass sie zusammen mit der anderen Platte eine Vielzahl von Strömungskanälen für ein Wärmeträgerfluid, insbesondere ein Kältemittel, bildet, wobei die Vielzahl von Kanälen einen Kanalbereich definiert, - Laserdurchstrahlschweißen der beiden Platten an den Wänden zwischen den Kanälen, die mit der zweiten Platte in Kontakt stehen, um den Kanalbereich zu bilden, - Anschließend Verbinden des Umfangs des Kanalbereichs von einer Platte mit der anderen Platte durch ein vom Laserdurchstrahlschweißen abweichendes Verbindungsmittel, vorzugsweise durch Verbinden mindestens einer Kanalwand, die besagten Umfang definiert.

9. Montageverfahren nach dem vorhergehenden Anspruch, das ferner einen dritten Verbindungsschritt durch eine zusätzliche Schweißnaht, vorzugsweise eine Laserschweißnaht, umfasst, die die Verbindung des Umfangs des Kanalbereichs durch das unterschiedliche Verbindungsmittel umgibt, insbesondere um Ränder mindestens einer der beiden Platten mit der anderen Platte zu verschweißen, vorzugsweise durch Laserschweißen.

10. Montageverfahren nach einem der Ansprüche 8 bis 9, das ferner einen Schritt zum Einbringen von Klebstoff, der eine Dichtung bildet, in eine gepresste Kanalwand umfasst, die den gesamten Umfang des Kanalbereichs definiert und einen Dichtungskanal bildet, sodass der Klebstoff durch die beiden platten bei ihrer Montage komprimiert wird, insbesondere gefolgt von einem Schritt zur Wärmebehandlung des Klebstoffs in der gepressten Wand, sobald die Platten der Vorrichtung zusammengefügt und der besagte Klebstoff komprimiert wurde.

## Claims

1. Thermal regulation device (1), in particular a cooling device, for an electrical component (2) liable to generate heat during operation, in particular for an electrical energy storage module, this device comprising a first plate (2) and a second plate (3) assembled with the first plate, each delimited by edges, to form together a plurality of circulation channels (5) for a heat transfer fluid, in particular a refrigerant fluid, the plurality of channels defining a channel zone (6), at least one of the plates being stamped in order to form part of the walls of the channels, the assembly of the two plates being achieved by transparency laser welding (7) at the level of the channel walls, the device being **characterised in that** a zone defining at least partially the perimeter of the channel zone comprises an assembly means (8) different from transparency laser welding (7), the different assembly means (8) being chosen from laser welding with a filler wire, bonding, friction-stir welding, or a combination thereof.

2. Thermal regulation device (1) according to the preceding claim, in which at least one wall of the channels defines the perimeter of the channel zone.

3. Thermal regulation device (1) according to one of the preceding claims, in which the perimeter of the channel zone, preferably the at least one channel wall defining at least part of the perimeter of the channel zone, comprises a weld formed by friction-stir welding.

4. Thermal regulation device (1) according to one of the preceding claims, in which the perimeter of the channel zone, preferably the at least one channel wall defining at least part of the perimeter of the channel zone, comprises a bonded joint.

5. Thermal regulation device according to one of the preceding claims, in which the perimeter of the channel zone, preferably the at least one stamped channel wall defining at least part of the perimeter of the channel zone, defines the entire perimeter of the channel zone and forms a sealing channel, the sealing channel comprising adhesive forming a seal.

6. Thermal regulation device according to one of the preceding claims, in which the device comprises an additional weld, preferably a laser weld, bordering the outer side of the junction of the perimeter of the channel zone by the different assembly means.

7. Thermal regulation device according to one of the preceding claims, in which the additional weld, preferably a laser weld, joins at least the edges of at least one plate to the other plate.

8. Method of assembling two plates to obtain a thermal regulation device, in particular a cooling device, for an electrical component liable to generate heat during operation, in particular for an electrical energy storage module, the method being **characterised in that** it comprises the following steps: - Providing two plates each delimited by edges, at least one of the plates being stamped in order to form part of the walls of the channels so as to form together with the other plate a plurality of circulation channels for a heat transfer fluid, in particular a refrigerant fluid, the plurality of channels defining a channel zone, - Transparency laser welding of the two plates at the level of the walls between the channels in contact with the second plate to form the channel zone, - Then joining the perimeter of the channel zone from one plate to the other plate by an assembly means different from transparency laser welding, preferably by joining at least one wall of the channels defining said perimeter.

9. Assembly method according to the preceding claim, further comprising a third joining step, by an additional weld, preferably a laser weld, surrounding the junction of the perimeter of the channel zone by the different assembly means, in particular so as to weld the edges of at least one of the two plates to the other plate, preferably by laser welding.

10. Assembly method according to one of Claims 8 to 9, further comprising a step of applying adhesive forming a seal into a stamped channel wall defining the entire perimeter of the channel zone and forming a sealing channel, such that the adhesive is compressed by the two plates during their assembly, in particular followed by a heat treatment step of the adhesive in the stamped wall once the plates of the device are assembled and said adhesive is compressed.
